# EUROPEAN PATENT APPLICATION

(11) **EP 4 722 486 A1**
(43) Date of publication of application: **08.04.2026**
(21) Application number: 24306637.0
(22) Date of filing: 04.10.2024
(51) Int. Cl.: E21B 17/02, E21B 17/042, F16L 15/00, F16L 15/06

(54) **TUBULAR JUNCTION FOR AN UNDERWATER PIPELINE OR RISER, AND CORRESPONDING METHOD OF CONNECTING TWO PIPES**

(71) Applicant: TotalEnergies OneTech, 92400 Courbevoie (FR); GMC Limited, Aberdeen Ecosse AB10 1HA (GB)
(72) Inventor: ASSIER, Ludovic, 64018 PAU CEDEX (FR); BONNET, Emilien, 64018 PAU CEDEX (FR); VIALE, Carlos, 64018 PAU CEDEX (FR); MAHATVARAJ, Alpha, 64018 PAU CEDEX (FR); FAN, Wei, 64018 PAU CEDEX (FR); JONES, Philip, 64018 PAU CEDEX (FR); ABID ASHRAF, Mohammad, 64018 PAU CEDEX (FR)
(74) Representative: Lavoix

(57) **Abstract**

An assembly (12) comprising:
- two pipes (14, 16) extending along an axis (X),
- a connector (18) for axially receiving pipe ends (28, 30) in opposite senses to form a tubular junction (32) defining an internal volume (34) for axial circulation of a fluid (36).

The connector having, on both sides of a plane (P) along the axis:
- a proximal portion (38), on which a proximal part (44) of the pipe end forming a tip (46) is adapted for abutting axially,
- a median portion (40) having a radially inner face (58) surrounding a median part (60) of the pipe end, the radially inner face and a radially outer face (64) of the median part flaring away from the plane and forming circular threads (66, 68), the median portion forming a jaw (62) around the median part,

- a distal portion (42) for radially pressing against a distal part (70) of the pipe end in order to prevent external water (72) or gas from entering the internal volume.

## Description

### FIELD

The present disclosure deals with an assembly comprising two pipes extending along an axis, each of the two pipes having a pipe body, and a pipe end, the assembly being adapted for forming a tubular junction in a connected configuration, the tubular junction defining an internal volume intended for axial circulation of a fluid.

The disclosure also deals with a pipe string, such as a pipeline or a riser, comprising at least one such assembly, and with a method of connecting the two pipes.

### BACKGROUND

Underwater pipelines or risers are obtained by connecting a plurality of pipes together in a watertight manner. Each pipe is usually welded to the next one to form tubular junctions able to prevent the external water to penetrate into the internal volume. However, such welding takes time and is expensive. Besides, weld fatigue may occur and must be monitored, as pipelines are subject to flexion and risers to tension, with fluctuating values.

Coupling using helical threading have been used in drilling. Such coupling were also tried to build pipelines in the years 1970-1980. However, this sometimes led to failures because screwed pipes tended to unscrew, particularly when the pipeline was subject to unfavorable ocean and/or weather conditions.

Mechanical connectors that solve or reduce the issue of unscrewing have been developed. However, these connectors are welded on the pipes to be connected, which increases the costs.

An objective of the disclosure is to provide an assembly allowing to connect two pipes in a safe watertight manner at reduced cost.

### SUMMARY OF THE DISCLOSURE

To this end, the disclosure proposes an assembly comprising:
- two pipes extending along an axis, each of the two pipes having a pipe body, and at least a pipe end machined on the pipe body, and
- a connector adapted for axially receiving the pipe end of each of the two pipes in opposite senses in a connected configuration of the assembly, in which the connector surrounds the pipe end of each of the two pipes about the axis, the pipe end of each of the two pipes and the connector forming a tubular junction extending on both sides of a plane perpendicular to the axis, the tubular junction defining an internal volume intended for axial circulation of a fluid,
the connector having, on both sides of the plane along the axis:
- a proximal portion with respect to the plane, on which a proximal part of the pipe end is adapted for abutting axially in the connected configuration, the proximal part forming a tip of the pipe end,
- a median portion having a radially inner face with respect to the axis, and adapted for surrounding a median part of the pipe end in the connected configuration, the radially inner face and a radially outer face of the median part both flaring away from the plane and both forming circular threads extending around the axis, the radially outer face and the radially inner face being configured for cooperating with each other in order to maintain the pipe end of each of the two pipes in the connected configuration, the median portion being adapted for forming a jaw around the median part, and
- a distal portion configured for radially pressing against a distal part of the pipe end in the connected configuration in order to prevent external water or gas from entering the internal volume.

In other embodiments, the assembly may comprise one or several of the following features, taken in isolation or any technically feasible combination:
- the connector is symmetrical with respect to the plane;
- the radially inner face of the median portion and the radially outer face of the median part both have a conical shape on which the circular threads form hollows and bumps;
- the distal portion comprises a first section and a second section along the axis, the first section being closer to the plane than the second section and adapted for forming a primary seal with the distal part in the connected configuration, the second section being radially thinner that the first section and adapted for forming a secondary seal with the distal part in the connected configuration, the primary seal and the secondary seal being adapted for preventing the external water or gas from flowing in between the median portion and the median part;
- the primary seal is formed by one or more radial protrusion(s) of the first section adapted for pressing against the distal part in the connected configuration, said one or more protrusion(s) fully surrounding the axis;
- said two protrusions have a rounded shape;
- the secondary seal is formed by at least one radial protrusion of the second section adapted for pressing against the distal part in the connected configuration, said protrusion fully surrounding the axis;
- said protrusion has a rounded shape;
- said protrusion is located at an axial tip of the second section;
- the first section defines a first radial thickness along a first plane perpendicular to the axis next to the primary seal, the second section defines a second radial thickness along a second plane perpendicular to the axis next to the secondary seal, the second thickness being smaller than the first thickness;
- the distal portion comprises a third section located between the first section and the second section along the axis, the third section defining a radially inner surface flush with a radially inner surface of the first section and with a radially inner surface of the second section, the third section defining a radially outer surface forming a continuous transition between the first section and the second section;
- on each side of the plane, the proximal portion and the proximal part together define a groove fully surrounding the axis and opening into the internal volume, the assembly comprising two sealing rings respectively adapted for being clad in the groove on each side of the plane; and
- the proximal part of the pipe end of each of the two pipes forms: an annular tongue surrounding the axis and adapted for being axially received in an annular recess defined by the proximal portion, and a surface radially extending from the tongue toward the interior volume and adapted for abutting axially against a surface of the proximal portion adjacent to the recess.

The disclosure also proposes a pipeline or a riser intended to be at least partly located underwater, comprising at least one assembly as described above.

The disclosure also proposes a method of connecting two pipes, comprising the following steps:
- obtaining an assembly as described above,
- axially receiving the pipe end of each of the two pipes in the connector in opposite senses in the connected configuration, and
- forming a tubular junction extending on both sides of the plane, wherein, on both sides of the plane: the proximal part of the pipe end axially abuts on the proximal portion of the connector, and the radially inner face of the median portion of the connector surrounds the median part of the pipe end, the radially inner face of the median portion and the radially outer face of the median part cooperate with each other in order to maintain the pipe end of each of the two pipes in the connected configuration, the median portion forming a jaw around the median part, and the distal portion of the connector radially pressing against the distal part of the pipe end in order to prevent external water or gas from entering the internal volume.

### BRIEF DESCRIPTION OF THE DRAWINGS

The disclosure and its advantages will be better understood upon reading the following description, given solely by way of example and with reference to the appended drawings, in which:
- Figure 1 is a partial, cross-sectional view of a pipe string according to the disclosure, along a radial plane, showing two pipes and a connector,
- Figure 2 is an enlarged view of a frame II shown in Figure 1, showing the proximal portion of the connector located on one side of a symmetry plane perpendicular to the axis of the pipes, and
- Figure 3 is an enlarged view of a frame III shown in Figure 1, showing the distal portion of the connector located on one side of the symmetry plane.

### DETAILED DESCRIPTION

### Pipe string and assembly

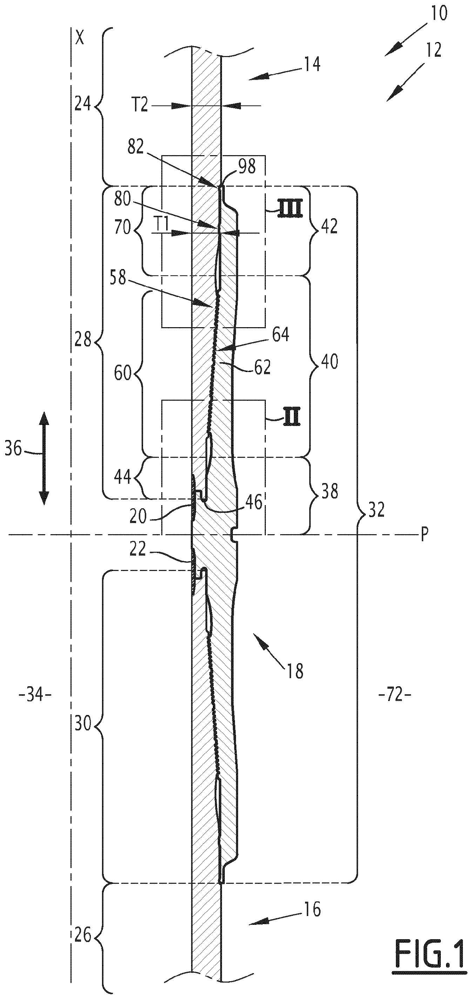

With reference to Figure 1, a pipe string 10 according to the disclosure will now be described.

The pipe string 10 is adapted to be at least partly located underwater.

The pipe string 10 is for example a pipeline or a pipeline section intended to lie on a seabed (not shown).

As a variant, the pipe string 10 is a riser or a riser section extending between the seabed and a surface structure (not shown), such as a platform, fixed or floating.

The pipe string 10 includes at least one assembly 12 according to the disclosure, comprising two pipes 14, 16 and a connector 18 adapted for connecting the two pipes together. The pipe string 10 may also include other pipes (not shown), for example analogous to the two pipes 14, 16, and other connectors (not shown), for example analogous to the connector 18.

The assembly 12 advantageously comprises two sealing rings 20, 22. Prior to make-up of the assembly 12, the sealing ring 22 may be attached to the pipe 16.

For example, the assembly 12 is symmetrical about an axis X.

### Pipes

The two pipes 14, 16 are only partly represented in Figure 1. Each of the two pipes 14, 16 extends along the axis X, and has a pipe body 24, 26, and at least a pipe end 28, 30 machined on the pipe body 24. Advantageously, one or each of the two pipes 14, 16 has another pipe end (not shown), for example analogous to the pipe end 26 and adapted for connecting one or each of the two pipes 14, 16 to other pipes.

The two pipes 14, 16 are for example high strength pipes of grade API 5L X65 or higher grades.

In the example, the pipe end 28 is analogous to the pipe end 30, so only the pipe end 28 will be described.

The pipe end 28 advantageously forms a pin. The pipe end 28 is advantageously machined directly on the pipe 14, which means that the pipe end 28 is not welded on the pipe body 24.

Advantageously, the pipe end 28 has a thickness T1 (from an interior side to an exterior side perpendicularly to the axis X) that is comparable to the thickness T2 of the pipe body, depending on the location where the pipe end thickness T1 is measured. The pipe end 28 advantageously forms no bead. Here, "comparable" for example means "equal +/- 20%".

### Connector

The connector 18 is adapted for axially receiving the pipe end 28, 30 of each of the two pipes 14, 16 in opposite senses in a connected configuration of the assembly, in which the connector surrounds the pipe end 28, 30 of each of the two pipes 14, 16 about the axis X. The connector 18 is for example concentric with each of the two pipes 14, 16.

In the connected configuration, the pipe end 28, 30 of each of the two pipes 14, 16 and the connector 18 form a tubular junction 32 extending on both sides of a plane P perpendicular to the axis X, the tubular junction defining an internal volume 34 intended for axial circulation of a fluid 36.

On both sides of the plane P along the axis X, the connector 18 has a proximal portion 38, a median portion 40 and a distal portion 42 with respect to the plane P.

Advantageously, the connector 18 is symmetrical with respect to the plane P. So only the upper half of the assembly 12 (on one side of the plane P) will be described below.

As a variant (not shown), the connector 18 is not symmetrical around the axis X, for example if an angle is requested between the two pipes 14, 16. In this case, the axis X is for example a central axis of one the two pipes 14, 16, and the other of the two pipes for example define an angle with the axis X.

### Area of the connector proximal portion

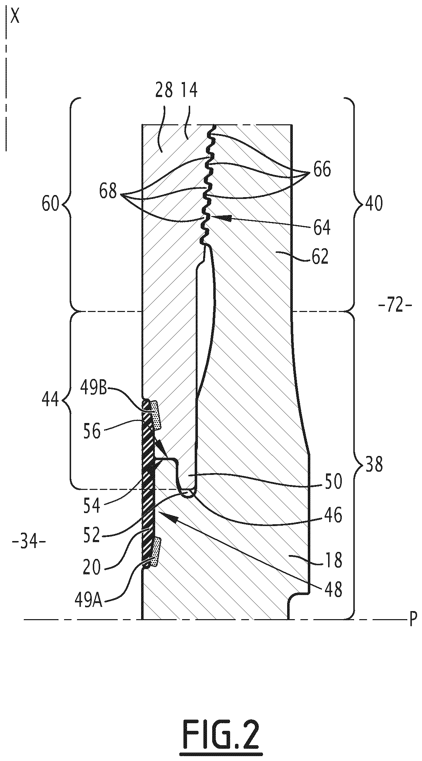

As best seen in Figure 2, a proximal part 44 of the pipe end 28 is adapted for abutting axially on the proximal portion 38, the proximal part 44 forming a tip 46 of the pipe end 28.

The proximal portion 38 and the proximal part 44 together for example defines a groove 48 fully surrounding the axis X and opening into the internal volume 34 on both sides of the plane P.

Advantagesously, the proximal portion 38 and the proximal part 44 comprise weld inlays 49A, 49B defining part of the grove 48.Advantageously, the proximal part 44 forms an annular tongue 50 surrounding the axis X and adapted for being axially received in an annular recess 52 defined by the proximal portion 38. For example, the proximal part 44 forms a surface 54 radially extending from the tongue 50 toward the interior volume 34 and adapted for abutting axially against a surface 56 of the proximal portion 38 adjacent to the recess 52.

The weld inlays 49A, 49B are for example made of a corrosion resistant alloy (CRA), such as Inconel and are welded to the rest of the proximal portion 38 and the rest of proximal part 44 respectively. The weld inlays 49A, 49B are in contact with the sealing ring 20, for example also made of corrosion resistant alloy, in order to form two seals.

In the example, the tongue 50 forms the tip 46 of the pipe end 28.

The two sealing rings 20, 22 are respectively adapted for being clad in the groove 48 on each side of the plane P. The two sealing rings 20, 22 are advantageously adapted for preventing the fluid 36 from flowing between the two pipes 14, 16 and the connector 18.

For example, the two sealing rings 20, 22 can be made of either high strength steel or a corrosion resistant alloy material, such as high nickel alloy (inconel 625) or equivalent. Both sides of each of the sealing rings 20, 22 have multiple (two or more) seal contact points.

### Area of the connector median portion

As shown in Figures 1 to 3, the median portion 40 has a radially inner face 58 with respect to the axis X and is adapted for surrounding a median part 60 of the pipe end 28. The median portion 40 is adapted for forming a jaw 62 around the median part 60 in the connected configuration.

The radially inner face 58 and a radially outer face 64 of the median part 60 both flare away from the plane P and both form circular threads 66, 68 extending around the axis X. For example, the inner face 58 and the outer face 64 both have a conical shape on which the circular threads 66, 68 form hollows and bumps.

The radially outer face 64 and the radially inner face 58 are configured for cooperating with each other in order to maintain the pipe end 28, 30 of each of the two pipes 14, 16 in the connected configuration.

The circular threads 66, 68 are advantageously adapted for not allowing any unscrewing, even if a relative rotation of the pipe end 28, 30 with respect to the connector 18 occurs about the axis X.

### Area of the connector distal portion

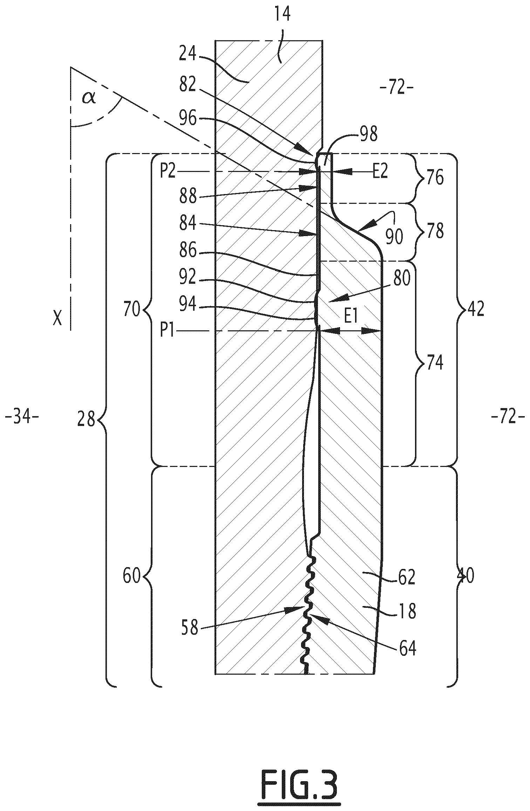

As shown in Figure 3, the distal portion 42 isconfigured for radially pressing against a distal part 70 of the pipe end 28 in the connected configuration in order to prevent external water 72 or a gas such as air from entering the internal volume 34.

The distal portion 42 for example comprises a first section 74 and a second section 76 along the axis X, the first section 74 being closer to the plane P than the second section 76. In the example, the distal portion 42 comprises a third section 78 located between the first section 74 and the second section 76 along the axis X.

The distal part 70 of the pipe end 28 is advantageously integral with the pipe body 24, without any circumferential weld in between.

The first section 74 is adapted for forming a primary seal 80 with the distal part 70 in the connected configuration. The second section 76 is radially thinner that the first section 74 and adapted for forming a secondary seal 82 with the distal part 70 in the connected configuration.

For example, the first section 74 defines a first radial thickness E1 along a first plane P1 perpendicular to the axis X next to the primary seal 80. The second section 76 defines a second radial thickness E2 along a second plane P2 perpendicular to the axis X next to the secondary seal 82, the second thickness E2 being smaller than the first thickness E1.

The third section 78 for example defines a radially inner surface 84 flush with a radially inner surface 86 of the first section 74 and with a radially inner surface 88 of the second section 76. The third section 78 defines a radially outer surface 90 advantageously forming a continuous transition between the first section 74 and the section 76.

### Primary seal

The primary seal 80 and the secondary seal 82 are adapted for preventing the external water 72 or a gas from flowing in between the median portion 40 and the median part 60.

The primary seal 80 is for example advantageously formed by two radial protrusions 92, 94 of the first section 74 adapted for pressing against the distal part 70 in the connected configuration.

As variants (not shown), the primary seal 80 is formed by only one protrusion or more than two protrusions.

Said two protrusions 92, 94 are successive axially and fully surrounds the axis X. The two protrusions 92, 94 for example have a rounded shape.

In a particular embodiment, the protrusion(s) is/are CRA clad(s).

### Secondary seal

The secondary seal 82 is for example formed by one radial protrusion 96 of the second section 76 adapted for pressing against the distal part 70 in the connected configuration, said protrusion 96 fully surrounding the axis X.

As variants (not shown), the secondary seal 82 is formed by two protrusions or more than two protrusions.

For example, the protrusion 96 has a rounded shape. The protrusion 96 is advantageously located at an axial tip 98 of the second section 76.

In a particular embodiment, the protrusion(s) is/are CRA clad (s).

### Method of connecting the two pipes

The operation of the assembly 12 stems from its structure and will now be briefly described, which also illustrates a method of connecting the two pipes 14, 16 according to the disclosure.

First the two pipes 14, 16 and the connector 18 are in a disconnected configuration (not shown, but which can obtained by translating the two pipes 14, 16 away from the connector 18 in Figure 1), in which the two pipes 14, 16 are away from the connector 18.

Then, the pipe end 28, 30 of each of the two pipes 14, 16 are received axially in the connector 18 in opposite senses in the connected configuration. The tubular junction 32 is thus formed and extends on both sides of the plane P.

In a particular embodiment, the pipes 14, 16 may be connected to the connector 18 at different times. For example, any one of the pipes 14, 16 may be connected to the connector 18 on shore, and then the other one of the pipes 14, 16 may be connected offshore.

On both sides of the plane P, the proximal part 44 of the pipe end 28, 30 axially abuts on the proximal portion 38 of the connector 18. The radially inner face 58 of the median portion 40 of the connector 18 surrounds the median part 60 of the pipe end 28, 30. The radially inner face 58 and the radially outer face 64 cooperate with each other in order to maintain the pipe end 28, 30 of each of the two pipes 14, 16 in the connected configuration.

The median portion 40 forms a jaw 62 around the median part 60, and the distal portion 42 of the connector 18 radially presses against the distal part 70 of the pipe end 28, 30 in order to prevent the external water 72 or gas from entering the internal volume 34.

In the example, the sealing rings 20, 22 are installed in the groove 48 of each of the two pipes 14, 16.

### Advantages

Thanks to the above described features, the assembly 12 allows to connect the two pipes 14, 16 in a safe leak tight manner with respect to gas, oil, hydrocarbons or CO2, at reduced cost.

Indeed, no welding is needed between the two pipes 14, 16 and between the pipe end 28, 30 and the pipe body 24, 26 of each of the two pipes 14, 16. Offshore installation of the pipe string 10 is faster. Installation costs may be cut with ordinary steel pipes, and even more significant cost savings when comparing to complex steel ones.

Besides, no unscrewing can occur in the connected configuration, which is very strong thanks to the jaw effect of the median portion 40 of the connector 18. Problems of weld fatigue, particularly in risers, are avoided.

The assembly 12 efficiently prevents external water ingress in the connected configuration, making the assembly suitable for deep waters.

In the example, the primary seal 80 is advantageously redundant (dual), which provides a double barrier. The secondary seal 82 is advantageously independent of the primary seal. The primary seal 80 and the secondary seal 82 are advantageously isolated one from the other by the third section 78 of the distal portion 42.

## Claims

1. An assembly (12) comprising:
- two pipes (14, 16) extending along an axis (X), each of the two pipes (14, 16) having a pipe body (24, 26), and at least a pipe end (28, 30) machined on the pipe body (24, 26), and
- a connector (18) adapted for axially receiving the pipe end (28, 30) of each of the two pipes (14, 16) in opposite senses in a connected configuration of the assembly (12), in which the connector (18) surrounds the pipe end (28, 30) of each of the two pipes (14, 16) about the axis (X), the pipe end (28, 30) of each of the two pipes (14, 16) and the connector (18) forming a tubular junction (32) extending on both sides of a plane (P) perpendicular to the axis (X), the tubular junction (32) defining an internal volume (34) intended for axial circulation of a fluid (36),
the connector (18) having, on both sides of the plane (P) along the axis (X):
- a proximal portion (38) with respect to the plane (P), on which a proximal part (44) of the pipe end (28, 30) is adapted for abutting axially in the connected configuration, the proximal part (44) forming a tip (46) of the pipe end (28, 30),
- a median portion (40) having a radially inner face (58) with respect to the axis (X), and adapted for surrounding a median part (60) of the pipe end (28, 30) in the connected configuration, the radially inner face (58) and a radially outer face (64) of the median part (60) both flaring away from the plane (P) and both forming circular threads (66, 68) extending around the axis (X), the radially outer face (64) and the radially inner face (58) being configured for cooperating with each other in order to maintain the pipe end (28, 30) of each of the two pipes (14, 16) in the connected configuration, the median portion (40) being adapted for forming a jaw (62) around the median part (60), and
- a distal portion (42) configured for radially pressing against a distal part (70) of the pipe end (28, 30) in the connected configuration in order to prevent external water (72) or gas from entering the internal volume (34).

2. The assembly (12) according to claim 1, wherein the connector (18) is symmetrical with respect to the plane (P).

3. The assembly (12) according to claim 1 or 2, wherein the radially inner face (58) of the median portion (40) and the radially outer face (64) of the median part (60) both have a conical shape on which the circular threads (66, 68) form hollows and bumps.

4. The assembly (12) according to any one of claims 1 to 3, wherein the distal portion (42) comprises a first section (74) and a second section (76) along the axis (X), the first section (74) being closer to the plane (P) than the second section (76) and adapted for forming a primary seal (80) with the distal part (70) in the connected configuration, the second section (76) being radially thinner that the first section (74) and adapted for forming a secondary seal (82) with the distal part (70) in the connected configuration, the primary seal (80) and the secondary seal (82) being adapted for preventing the external water (72) or gas from flowing in between the median portion (40) and the median part (60).

5. The assembly (12) according to claim 4, wherein the primary seal (80) is formed by one or more radial protrusion(s) (92, 94) of the first section (74) adapted for pressing against the distal part (70) in the connected configuration, said one or more protrusion(s) (92, 94) fully surrounding the axis (X).

6. The assembly (12) according to claim 5, wherein said two protrusions (92, 94) have a rounded shape.

7. The assembly (12) according to any one of claims 4 to 6, wherein the secondary seal (82) is formed by at least one radial protrusion (96) of the second section (76) adapted for pressing against the distal part (70) in the connected configuration, said protrusion (96) fully surrounding the axis (X).

8. The assembly (12) according to claim 7, wherein said protrusion (96) has a rounded shape.

9. The assembly (12) according to claim 7 or 8, wherein said protrusion (96) is located at an axial tip (98) of the second section (76).

10. The assembly (12) according to any one of claims 4 to 9, wherein the first section (74) defines a first radial thickness (E1) along a first plane (P1) perpendicular to the axis (X) next to the primary seal (80), the second section (76) defines a second radial thickness (E2) along a second plane (P2) perpendicular to the axis (X) next to the secondary seal (82), the second thickness (E2) being smaller than the first thickness (E1).

11. The assembly (12) according to any one of claims 4 to 10, wherein the distal portion (42) comprises a third section (78) located between the first section (74) and the second section (76) along the axis (X), the third section (78) defining a radially inner surface (84) flush with a radially inner surface (86) of the first section (74) and with a radially inner surface (88) of the second section (76), the third section (78) defining a radially outer surface (90) forming a continuous transition between the first section (74) and the second section (76).

12. The assembly (12) according to any one of claims 1 to 11, wherein, on each side of the plane (P), the proximal portion (38) and the proximal part (44) together define a groove (48) fully surrounding the axis (X) and opening into the internal volume (34), the assembly (12) comprising two sealing rings (20, 22) respectively adapted for being clad in the groove (48) on each side of the plane (P).

13. The assembly (12) according to any one of claims 1 to 12, wherein the proximal part (44) of the pipe end (28, 30) of each of the two pipes (14, 16) forms:
- an annular tongue (50) surrounding the axis (X) and adapted for being axially received in an annular recess (52) defined by the proximal portion (38), and
- a surface (54) radially extending from the tongue (50) toward the interior volume (34) and adapted for abutting axially against a surface (56) of the proximal portion (38) adjacent to the recess (52).

14. A pipe string (10) intended to be at least partly located underwater, comprising at least one assembly (12) as described by any one of claims 1 to 13.

15. A method of connecting two pipes (14, 16) comprising the following steps:
- obtaining an assembly (12) as described by any one of claims 1 to 13,
- axially receiving the pipe end (28, 30) of each of the two pipes (14, 16) in the connector (18) in opposite senses in the connected configuration, and
- forming a tubular junction (32) extending on both sides of the plane (P), wherein, on both sides of the plane (P): the proximal part (44) of the pipe end (28, 30) axially abuts on the proximal portion (38) of the connector (18), and the radially inner face (58) of the median portion (40) of the connector (18) surrounds the median part (60) of the pipe end (28, 30), the radially inner face (58) of the median portion (40) and the radially outer face (64) of the median part (60) cooperate with each other in order to maintain the pipe end (28, 30) of each of the two pipes (14, 16) in the connected configuration, the median portion (40) forming a jaw (62) around the median part (60), and the distal portion (42) of the connector (18) radially pressing against the distal part (70) of the pipe end (28, 30) in order to prevent external water (72) or gas from entering the internal volume (34).
